**Europäisches Patentamt**

**European Patent Office**

**Office européen des brevets**

(11) Publication number: **0 361 667**
**A2**

# EUROPEAN PATENT APPLICATION

(21) Application number: **89308349.3**

(22) Date of filing: **17.08.89**

(30) Priority: **26.08.88 JP 210459/88**

(43) Date of publication of application:
**04.04.90 Bulletin 90/14**

(84) Designated Contracting States:
**DE FR GB**

(51) Int. Cl.⁵ **B60C 1/00**

(71) Applicant: **THE YOKOHAMA RUBBER CO., LTD.**
**36-11, Shinbashi 5-chome Minato-ku**
**Tokyo, 105(JP)**

(72) Inventor: **Ishigami, Toshiya**
**15-1 Shimokawata, Annex 86-1-H**
**Hashira-machi, Okazaki-shi, Aichi-ken(JP)**

(74) Representative: **Gordon, Martin et al**
**G.F. Redfern & Company Marlborough Lodge**
**14 Farncombe Road**
**Worthing West Sussex, BN11 2BT(GB)**

(54) **Pneumatic tire with reduced road noise and superior running stability.**

(57) A pneumatic tire is disclosed which is designed to have reduced road noise and superior running stability. These performance characteristics are attributed to the use of a tread formed from a rubber composition comprising two selected, uncured and cured, rubber mixes of specified physical properties and further to the assembly of two or more belts positioned at specified angles.

# FIG.1

EP 0 361 667 A2

## PNEUMATIC TIRE WITH REDUCED ROAD NOISE AND SUPERIOR RUNNING STABILITY

This invention relates to automobile tires and more particularly to pneumatic tires having reduced road noise and improved running stability.

Noises perceived inside the car are known to result from various internal and external sources. In general, road noise is produced by the tires being vibrated while running over a coarse or bumpy road surface and thus tending to rumble the car body. To control or otherwise reduce such tire-road interface noise, many attempts have been made with a tire in which the cap tread is formed from rubber of great hysteresis loss, a tire in which the tread is built to be relatively thick, or a tire in which the bead is rendered less rigid.

The best possible control of road noise has been found attainable by the use of cap treads formed from rubbers of small modulus, which quality is associated with rubber rigidity. A certain rubber composition has been proposed to this end which is formulated with limited amounts of carbon black added. Too low a content of such additive, however, will in most instances make the resulting composition difficult to mould by extrusion and hence totally unsatisfactory for practical purposes. Alternatively, a vulcanized pulverized rubber has been incorporated in a given base rubbed so as to balance the rigidity and extrudability qualities imparted to the finished composition. This prior combination rubber is effective in controlling road noise but only in an extent to invite inadequate runnability.

It has now been found that automobile tires of reduced road noise and improved running stability can be obtained by the use of treads formed from composite rubber mixes of specified compositions and further by the assembly of belts positioned at selected angles. The present invention is therefore directed to the provision of a novel pneumatic tire in which road noise will be reduced to an absolute minimum with running stability held at a high level and which will be processed with utmost ease.

The above and other objects and advantages of the invention will be better understood from the following description taken in conjunction with the accompanying drawings.

More specifically, the invention provides a pneumatic tire comprising:

(a) a tread portion formed of a rubber composition comprising first and second rubber mixes, the first rubber mix including at least one uncured rubber, the second rubber mix including at least one cured rubber having a lower hardness than the uncured rubber after vulcanization and canon black in an amount up to 20 parts by weight per 100 parts by weight of the cured rubber, the second rubber mix having an average particle size of from 100 to 1,000 micrometers and combined with the first rubber mix in a volume fraction of from 3 to 10 percent based on the total tread volume;

(b) a carcass ply; and

(c) at least two belt plies disposed over the carcass and positioned at an angle of from 35 to 40 degrees with respect to the circumferential plane of the tire, one of the belts being oriented to cross the other.

Figure 1 is a partial sectional veiw, of the pneumatic tire embodying the present invention.

Figure 2 is a graphic representation of the correlation between the road noise heard in the car and the volume fraction of the vulcanized pulverized rubber mix according to the invention.

Figure 3 is a view similar to Figure 2, but illustrative of the cornering force of the tire plotted against the volume fraction of the particulate rubber mix.

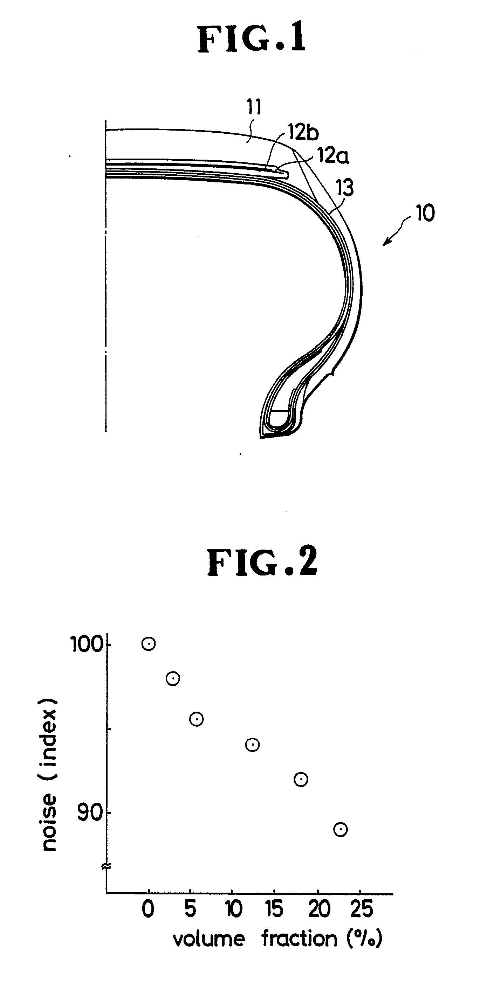

A pneumatic tire, provided in accordance with the present invention and shown at 10 in Figure 1, is constructed with a tread portion 11, a carcass ply 13 and two belt plies 12a and 12b interposed therebetween. According to one important aspect of the invention, the tread is constituted by a rubber composition comprised essentially of two different rubber mixes hereunder called "Mix A" and "Mix B", respectively.

Mix A typically comprises one or more selected uncured rubbers in common use for tread formation, carbon black in an amount of 40 to 100 parts by weight and a softener in an amount of smaller than 40 parts by weight, respectively, per 100 parts by weight of the uncured rubber. The rubber suitable for Mix A is by nature vulcanizable enough to provide high hardness and hence great modulus.

Mix B is made essentially of one or more selected cured rubbers and, where desired, carbon black in an amount of not more than 20 parts by weight based on 100 parts by weight of the cured rubber. The rubber eligible for purposes of Mix B is lower in hardness than the uncured rubber of Mix A upon vulcanization. Mix B is pulverized to a specific particle size and blended with Mix A in a specific volume fraction, the size and fraction being described later.

The term uncured or cured used herein is construed as being referred to synonymously with vulcanization.

Mix B may conveniently be admixed with Mix A such that the former mix is dispersed throughout the tread. In the case of the tread being built of a cap-base structure, the particulate mix maybe incorporated either in a base tread located near to the tire belting or in a cap tread exposed for direct contact with the road surface. The tread may if necessary be multilayered with Mix B layers and Mix A layers alternately sandwiched, and in such instance one Mix A layer should preferably be arranged in an outermost position. This layup however varies with the nonabrasive qualities of rubbers employed.

Mix B should be combined with Mix A in a volume fraction of 3 to 10% based on the total tread volume. Volume fractions if smaller than 3% would show no appreciable reduction in road noise and if larger than 10% would lead to insufficient running stability.

The average particle size of Mix B should range from 100 to 1,000 μm, preferably 200 to 500 μm. Coarse particles above 100 μm would fail to give road noiselessness, whereas fine particles below 1,000 μm would result in a tread of inadequate resistance to abrasion. The shape of the particles is not specifically restrictive, but may be feasibly spherical, triangular, square, polygonal, cylindrical, prismatic, conical, pyramidal, hollow and the like, these shapes being applicable as singular or combinative. Mix B may be used usually in the form of cut rubber obtained by scission of the corresponding vulcanizate.

No particular limitation is imposed upon the type of rubbers for use in Mix B, and hey may be selected typically from natural rubber (NR), polyisoprene rubber (IR), butadiene rubber (BR), styrene-butadiene rubber (SBR), halogenated butyl rubber (hal-IIR) and the like and also from rubber blends thereof.

Rubbers used in Mix A may by suitable choice be taken from the rubbers and rubber blends noted above in connection with Mix B. Particularly preferred for Mix A are NR, BR, SBR and their combinations.

In the practice of the invention, any selected uncured rubber in Mix A should exhibit, upon vulcanization, a higher hardness and hence a greater modulus than any selected cured rubber in Mix B. Reversal of the hardness qualities in both mixes should be avoided to preclude the inability of the finished tread to control road noise and even the fear of the tread of inducing malfunction. Mix A may range in hardness from 55 to 70 and Mix B from 20 to 45 as determined on a JIS spring type hardness tester (JIS K-6301). The difference in this quality between the two mixes may preferably fall within the range of 20 to 50. Because the magnitudes of hardness in the mixes are dominated by the contents of carbon black, the above specified ranges of such reinforcing agent should be strictly observed.

Each of Mix A and Mix B may be formulated with various other additives such as antioxidants, vulcanization accelerators, vulcanization activators, process oils, stearic acids, zinc oxides, sulfurs and the like.

The tire contemplated under the invention is assembled with two or more belt plies disposed over the carcass 13, only two belts 12a and 12b being illustrated in Figure 1. Importantly, the belts should be positioned at an angle of 35 to 40° with respect to the circumferential plane of the tire, one of the belts being oriented to cross the other. This belt positioning contributes to not only minimized road noise but also enhanced running stability. Belt angles if wider than 40° would make the resulting tire unstably runnable and if narrower than 35° would lead to inconvenient fabrication. As belting materials any steel cords may be used as accepted in the industry.

The rubber composition according to the invention has now been found highly moldable by extrusion as are those compositions known in the art for tread formation. This is interpreted to mean that the tire of the invention may be produced in conventional manner and for instance by extruding the composition into a sheet which is thereafter disposed in a tread at its predetermined region or regions, by assembling the tread with other tire parts and subsequently by subjecting the resulting green tire to vulcanization.

## EXAMPLES

The present invention will be further described by way of the following examples which are provided for purposes of illustration and not for purposes of limitation.

A strip-like vulcanizate of 38 in JIS hardness was prepared from a cured Mix B formulation tabulated below, followed by cutting to an average particle size of 640 μm. The Mix B cut was blended in varied fractions with an uncured Mix A formulation also tabulated, after which five compositions according to the invention were provided. Mix A on vulcanization showed a JIS hardness of 63. A control was used in which Mix B was omitted.

Six tires of an arrangement shown in Figure 1 and of a 165 SR 13 size were produced with the use of all the test compositions in the respective treads. Two belt cords were crossed and angled at 43° in each of the tires.

3

Performance evaluation was made of the tires for road noise under the conditions given below and with the results shown in Figure 2.

A car equipped with each of the tires was allowed to run on a bumpy asphalt road at a speed of 40 to 60 km hr. Road noise was measured by the passenger sitting in the car and wearing a microphone on his or her ears. The noisiness level was compared by taking the control tire as a number index of 100.

As appears clear from Figure 2. road noise decreased with increased amounts of Mix B added. Larger contents of Mix B revealed unstable tire running, entailing a close examination of belt angles upon runnability.

The procedure for the above group of tires was followed except that the belt pairs were oriented to cross at 37° and at 40°, respectively, thereby giving another group of four tires. The comparative belt angle was set at 43°.

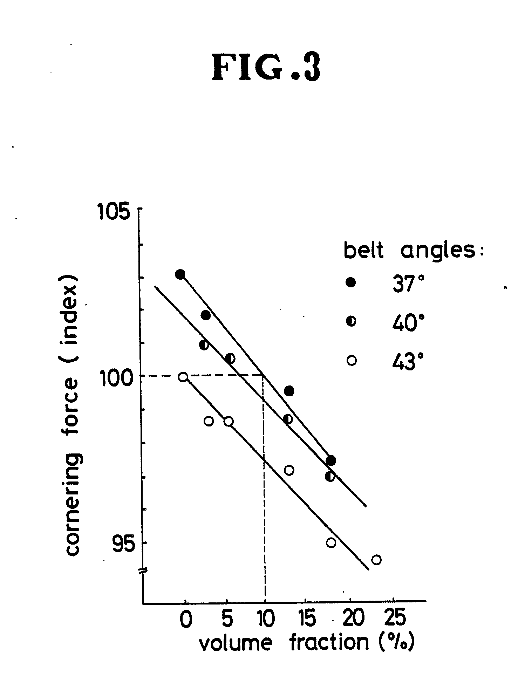

Cornering force was examined as regards both groups of tires, i.e. ten different tires, with the results shown in Figure 3.

The cornering quality was determined by the average force required for the loaded tire to turn at a slip angle of one degree on a flat steel plate. Testing was effected with an internal pressure of 1.9 kg/cm², a load of 425 kgf and a speed of 10 km hr. Comparison was made with the control tire taken as a standard index of 100.

As seen from Figure 3. tire runnability has been found to depend upon smaller Mix B fractions and also upon wider belt angles. The tires of the invention are substantially matched in running stability with the control tire having a belt angle set at 43°. A good balance between road noiselessness and running stability can be attained, as evidenced by the comparative testing, by strict observance of the above specified ranges of particulate rubber mixed and belt cord angles.

While the invention has been described with reference to its specific embodiments, it will be noted that various alterations and modifications may be made, as conceived by those skilled in the art, within the scope of the appended claims.

Table

| components | formulations (by weight part) | |
|---|---|---|
| | Mix B (cured) | Mix A (uncured) |
| SBR 1502 | - | 100 |
| NR | 100 | - |
| carbon black (N339) | 5 | 75 |
| zinc oxide | 3 | 3 |
| stearic acid | 2 | 2 |
| antioxidant *) | 2 | 2.0 |
| wax | 1 | 1.0 |
| process oil | 5 | 35 |
| accelerator (Nobs) | 1.0 | 1.0 |
| sulfur | 1.5 | 1.5 |
| after-cure hardness | 38 | 63 |

*) Antigen 6C, N-phenyl-N-(1,3-dimethylbutyl)-p-phenylenediamine, Sumitomo Chemical Industries Co.

## Claims

1. A pneumatic tire comprising:

(a) a tread portion formed of a rubber composition comprising first and second rubber mixes, said first rubber mix including at least one uncured rubber, said second rubber mix including at least one cured rubber having a lower hardness than said uncured rubber after vulcanization and carbon black in an amount up to 20 parts by weight per 100 parts by weight of said uncured rubber, said second rubber mix having an average particle size of from 100 to 1,000 micrometers and combined with said first rubber mix in a volume fraction of from 3 to 10 percent based on the total tread volume;

(b) a carcass ply; and

(c) at least two belt plies disposed over said carcass and positioned at an angle of from 35 to 40 degrees with respect to the circumferential plane of the tire, one of said belts being oriented to cross the other.

2. The tire of claim 1 wherein said uncured rubber is selected from the group consisting of natural rubber, polyisoprene rubber, butadiene rubber, styrene-butadiene rubber, halogenated butyl rubber and combinations thereof.

3. The tire of claim 1 wherein said cured rubber is selected from the group consisting of natural rubber, polyisoprene rubber, butadiene rubber, styrene-butadiene rubber, halogenated butyl rubber and combinations thereof.

4. The tire of claim 1 wherein said uncured rubber when vulcanized has a JIS hardness of from 55 to 70.

5. The tire of claim 1 wherein said cured rubber has a JIS hardness of from 20 to 45.

6. The tire of claim 1 wherein said second rubber mix is disposed at one or more regions of said tread.

7. The tire of claim 1 wherein said tread has a two- or multi-layered structure.

8. A tire substantially as described herein with reference to Figure 1 of the accompanying drawings.

# FIG.1

# FIG.2

# FIG.3